# EUROPEAN PATENT SPECIFICATION

(11) **EP 2 242 378 B1**
(45) Date of publication and mention of the grant of the patent: **06.07.2011**
(21) Application number: 09704828.4
(22) Date of filing: 16.01.2009
(51) Int. Cl.: A23L 1/054, C08B 37/00, C12H 1/14

(54) **PROCESS FOR THE TARTARIC STABILIZATION OF WINE**
VERFAHREN FÜR DIE WEINSÄURESTABILISIERUNG
PROCÉDÉ POUR LA STABILISATION TARTRIQUE DU VIN

(30) Priority: 23.01.2008 IT PD20080022
(43) Date of publication of application: 27.10.2010
(73) Proprietor: Enologica Vason S.r.l., 37020 Pedemonte di San Pietro in Cariano (IT)
(72) Inventor: VASON, Albano, I-37029 San Pietro In Cariano (VR) (IT)
(74) Representative: Gallo, Luca
(86) International application number: PCT/IB2009/000099
(87) International publication number: WO 2009/093123

(56) References cited:
- EP-A- 0 789 750
- WO-A-02/12348
- US-A- 5 028 703
- US-A- 5 849 720
- US-A1- 2007 299 034
- COMUZZO P ET AL: "Technological application of a yeast industrial derivative to tartaric and protein stabilization of white wines" SCIENCES DES ALIMENTS, vol. 24, no. 5, 2004, pages 371-382, XP009115450 ISSN: 0240-8813

## Description

### Field of application

The present invention concerns a stabilization process for the tartaric stabilization of wine

The technology in question is suitable for use advantageously in the wine sector in order to prevent tartaric precipitations which form in white, red and rosé wines.

### State of the art

As is known, for the commercial distribution of wines in bottles, the wine must not only be clear at the time of bottling, but must also remain in this condition over the course of time, in particular in the case of wines which are intended to be stored for long periods, for example in a wine cellar.

In order for the wine to retain its clear characteristics over time, specific stabilization treatment methods are used.

According to the state of the art numerous treatment methods for the stabilization of wines are known.

In the wine sector the precipitation of tartaric or protein salts present in the wine is frequently referred to by the expression "tartaric or protein casse".

In fact, for example during the conservation of white wines, the protein casse produces cloudiness or specific deposits, usually of whitish colour, which appear in the bottle when the wine conservation temperature is high and/or following enrichment of the wine with tannin originating from the stopper.

One of the known solutions for the stabilization of protein casse consists in the treatment of musts and wines with betonite, but the doses necessary for obtaining the desired stabilizing effect may be sufficiently high to alter the organoleptic properties of the wines and musts thus treated.

In order to eliminate the proteins responsible for the formation of the casse, other experiments have been carried out, based on yeasts or enzymatic methods for example using proteases or particular enzymes able to catalyze rupture of the peptide bond between amino acids in the proteins, but the results are not yet satisfactory.

It is known that potassium, tartaric acid and calcium are present in a high concentration in wines, musts, grape juice in general or other beverages. In addition, during the fermentation phase, potassium bitartrate, also called tartar, is formed. Furthermore, during fermentation, calcium tartrate may also be formed.

Wine, thus being a solution supersaturated with potassium bitartrate, is subject to precipitation of this salt. Likewise the presence of calcium may constitute a further risk for the precipitation of the tartaric acid salt.

Total precipitation of the abovementioned salts in crystalline form is a phenomenon which generally requires a lot of time and is influenced by various factors. These factors include, for example, the quantity of ethanol present in the wine, the temperature at which the wine is stored and the acidity of the wine itself.

It must be pointed out in particular that the abovementioned salts are less soluble in ethanol than in water. Therefore, at the same time as formation of ethanol due to fermentation of the wine, and also thereafter, slow and gradual precipitation of the salts occurs. The presence of crystals or deposited solids due to this phenomenon represents a serious problem, since they are generally not particularly liked by the consumer who is therefore discouraged from drinking the wine. The precipitation of the potassium bitartrate and calcium tartrate salts, in fact, may generally continue even after bottling of the wine, with particularly negative consequences for the product's image. It is therefore necessary to subject the wine to tartaric stabilization processes so as to prevent precipitation of the abovementioned troublesome salts.

A first known method for the tartaric stabilization of wines employs a reduction in the temperature, which facilitates precipitation of potassium bitartrate, but not the calcium tartrate. This property is today still the property most commonly exploited using both conventional systems and continuous systems.

Once it has precipitated, the bitartrate must be removed by means of filtration in order to eliminate the crystals which have thus formed.

This known method has a number of drawbacks in that it does not demonstrate a very high degree of efficiency and in some cases is entirely ineffective and also causes the elimination during filtration of some substances which have a beneficial effect on the quality of the wine.

An improvement to this method envisages adding to the wine large quantities of crystals so that the low-temperature treatment becomes more effective and lasts a shorter amount of time. The filtration operation is, however, necessary in order to be able to eliminate the crystals added and those which are newly formed.

A second known method envisages treating the wine using membrane-filter electrodialysis, as described, for example, in the patents FR2709308, FR2192170 and IT971999.

Finally, methods for the tartaric stabilization of wine, which employ ion-exchange resins, are known.

It is known from the article by Amati, Ferrarini and Barbieri entitled "Autoarrichimento dei mosti con membrane permeo-selettive" [Self-enrichment of musts using permeable selective membranes] (Industrie delle Bevande 1997, Istituto di Ind. Agrarie, Univ. degli Studi di Bologna, vol. 26, No. 147, pages 23-25, 40, xp-000983024) to enrich certain fractions of the must by means of nanofiltration so as to separate a permeate from a retentate, following which the permeate undergoes an electrodialysis treatment before being combined again with the retentate. The patents DE 2548066 and DE 2553416 teach the removal of the tartrate from the wine by performing ultrafiltration of the wine and then carrying out a tartaric stabilization process on the permeate alone.

This latter solution has a number of drawbacks. In fact treatment with resins applied to all of the wine also results in the removal of aromatic and colouring substances, influencing negatively the quality of the wine itself.

On the other hand electrodialysis, owing to the limitations of the currently available membranes, is very problematic since it requires decidedly sophisticated equipment.

All of the abovementioned solutions are not satisfactory in that they are both fairly costly and time-consuming and moreover modify the organoleptic properties of the wine treated.

A further method consists in adding to the wine metatartaric acid which prevents crystallization of the tartaric salts under the effect of cold.

The protective effect, however, disappears when the metatartaric acid hydrolyzes, and this process occurs all the more rapidly the higher the conservation temperature.

This method therefore is effective only for a limited period of time and therefore may be applied only to wines intended for consumption and moreover envisages the addition to the wine of a foreign compound which is initially absent.

In order to overcome the abovementioned problems, more recently wine stabilization methods which use mannoproteins have been used.

As is known, the wall of yeast cells has a thickness of about 70 mm and represents 15 to 25% of the dry weight of the cell (J.S.D. Bacon, V.C. Farmer, D. Jones, I.F. Taylor, biochemistry. J. 114,557 (1969) and is an important source of polysaccharides. It in fact consists of 90% polysaccharides, the remainder consisting of proteins and lipids. Its composition varies depending on the yeast strain. The polysaccharides in the wall of the yeasts consist mainly of glucans, mannoproteins and chitin.

As is known, the practice of refining the wines on the fermentation lees has highlighted several chemical/physical phenomena which are associated with the polysaccharides.

In particular, it has been possible to observe that the polysaccharides of yeasts, such as those in the grape, participate in formation of the body and structure of wines and also bond with the tannins, reducing their aggressive action.

More recently (April 2006) the EC has authorised the use of mannoproteins in the wine sector.

Mannoproteins are compounds which are obtained industrially from the lysis of wine yeasts. The aim of using these substances is to replicate in a standardised manner, by means of the simple addition of mannoproteins inside a vat, the process which occurs with refinement on lees.

The use of mannoproteins for the tartaric (and also protein) stabilization of wines is described in particular in patent EP 789750.

According to the preamble of this patent, some recent tests have shown that the mannoproteins extracted using the heat from the cellular walls of yeasts which belong to the species *Saccharomyces cerevisiae* have an effect which inhibits crystallisation of the tartaric salts.

The process for obtaining the mannoproteins consists in solubilizing them using heat, in particular at a temperature of 100°C in an aqueous means, and retrieving them both directly by means of lyophilization and by means of precipitation of the ethanol and centrifugal drying of the precipitate.

These mannoproteins did not have a particularly high stabilization efficiency for most of the wines.

The patent EP 789750 describes a treatment for stabilizing wine against the effects of tartaric salts and proteins, which envisages adding mannoproteins extracted from the cell wall of the yeasts by means of enzymatic digestion.

More particularly, the tartaric stabilization treatment described in the abovementioned patent uses mannoproteins extracted from the cell walls of yeasts by means of enzymatic digestion using a mixture of Beta 1,3 and Beta 1,6 glucanase. The yeast used belongs in particular to the species *Saccharomyces cerevisiae* and the quantity of mannoproteins used in the wine is preferably less than 30 g/hl.

Differently, the patent EP 1240306 describes a wine stabilization technique which uses an oligonucleotide or a polynucleotide.

Numerous wine treatment methods are known, in particular where enzymatic preparations with a pectolytic activity and β-glucanase are used, with the aim of freeing the mannoproteins from the yeasts, reducing the polysaccharides with a high molecular weight, such as pectins and glucans, in order to improve the fattiness of the wines, stabilize further the aromas and colour, and facilitate the clarification operations which may be less intense and therefore have a less invasive effect on the characteristics of the wine.

Hitherto the use of glucans in vinification processes and in particular for the stabilization of wine was not recommended. In fact, the glucans released by the yeasts may act as filler colloids, slowing down filtration, in particular in the case of young wines. In particular, as is known, the glucans produced by Botrytis cinerea are an important obstacle to filtration.

The use of glucans is instead known in the area of pharmaceutical compositions on account of its absorption characteristics, as described in the international patent WO 02/12348.

The cell walls of single-cell plants and organisms consist mainly of polysaccharides with a three-dimensional structure, partially associated with proteins.

The polysaccharides form a three-dimensional network which allows one to obtain from the cell walls particles which are able to retain some initial properties such as, for example, the capacity for selective absorption.

The final properties of the particles depend on the starting product or, for example, the type of yeast, the strain used, the culture conditions and the methods used during the isolation process which must not alter the functional properties of the particles which are to be subsequently used.

For example a low number of amino acids reduces the protein content in the cell wall.

As is known, yeasts are single-cell organisms with a rigid cell wall consisting of polysaccharides, with a thickness of about 70 nm, which represents about 15 to 25% of the dry weight of the yeast and the composition of which depends on the strain used and the culture methods.

The main components of the yeast cell wall, expressed as a percentage by weight, are: mannans (a mannose polymer) 30%; glucans 30%; proteins 15%; lipids 10% and chitin 2%.

Glucan is a glucose polymer and is composed of a fraction insoluble in an alkaline environment, representing about 80 to 85% of the glucan in the cell wall, and a fraction soluble in an alkaline environment.

The results of an electron microscope analysis of the biosynthesis processes of glucans in *Candida albicans* showed the development of reticular connections in the cell wall, in particular in the form of triple helices of micro fibrils with a diameter of approximately 2 nm connected together so as to form fibrils with a diameter of 4-8 nm, resulting in the formation of a structure with interfibrillar spaces having a size of about 100-200 nm and giving rise to pores which are present in the cell walls and which form the structural basis of the glucan absorption capacity.

The chemical procedures principally used to isolate and purify the components in the cell wall such as, for example, the use of sodium hydroxide as a reagent for the isolation of mannoproteins, or treatment of the whole cells with pure water at a temperature above 135°C in order to obtain a fraction highly contaminated by mannoproteins, or also the enzymatic methods for releasing the mannoproteins, have hitherto influenced the characteristics of the glucan particles, changing their reticular structure with respect to the active porous structure originally present in the cell wall.

An approach commonly used to free glucan from mannoproteins and proteins of another type consists in the extraction using 2% sodium dodecyl sulphate (SDS) at boiling point, with or without reducing agents such as mercaptoethanol.

Alternatively, enzymatic methods were used to obtain release of mannoproteins. In this connection, protease and glucanase were used, modifying the protein component of mannans and glucans which fixes the mannoprotein.

The glucan free of mannans is further purified by means of procedures which include treatment with acetic acid or hydrochloric acid.

As mentioned, the procedures illustrated for isolating and purifying cell wall components have a varying effect on the formation of the polymers, which is reflected by the occurrence of an increase in the quantity of soluble glucan and disorders in the structure of the insoluble glucan fraction.

In particular, the pores in the structure of the glucans thus obtained are not active or are not free from physical or chemical bonding material.

The patent WO 02/12348 discloses an isolation process which is able to obtain glucan particles retaining the original porous structure, using cell walls, in particular yeast cell walls. This patent indicates an advantageous use of this glucan as an absorption agent in the pharmaceutical field.

US-A-5849720 discloses a method for producing soluble preparations of neutral glucan polymers. The method involves treating whole glucan particles with a unique sequence of acid and alkaline treatments to produce soluble glucan. The soluble glucan can be purified to obtain a physiologically acceptable solution of neutral glucan molecules. A soluble neutral glucan preparation is obtained which forms a clear solution at a neutral pH and is equilibrated in a pharmaceutically acceptable carrier.

COMUZZO P. et al., Sciences des Aliments, vol. 24, no. 5, 2004, pages 371-382, teaches to use non-purified yeast cell lysate for the tartaric stabilization of wine. More in particular this document teach to use only the mannoprotein fraction of the yeast cell and mentions the positive effects of this fraction.

US 2007/299034 A1 discloses a method for isolating cell wall derivatives from fungal or yeast biomass and in particular for isolating chitin-glucan copolymers. Moreover, this document teach the use of chitin-glucan copolymers obtainable by the method in medical, pharmaceutical, agricultural, nutraceutical, food, textile, cosmetic, industrial and/or environmental applications, and in particular of chitin-glucan copolymers used as a technological additive for treating a food-grade liquid or in orally administered compositions.

### Disclosure of the invention

The main object of the present invention is therefore that of overcoming the drawbacks of the solutions of the known type mentioned above, by providing a process for tartaric stabilization of the wine, which is extremely effective.

A further object of the present invention is to provide a process which allows a reduction in the time needed for tartaric stabilization of wine.

A further object of the present invention is to provide a process for the tartaric stabilization of wine which can be easily used for the stabilization of different types of wines, i.e. red, white and rosé wines.

A further object of the present invention is to provide a process for the tartaric stabilization of wine, which can be easily applied.

A further object of the present invention is to provide a process for the tartaric stabilization of wine, which uses natural and biological substances.

A further object of the present invention is to provide a process for the tartaric stabilization of wine, which does not alter the organoleptic properties of the wine treated.

A further object of the present invention is to provide a process for the tartaric stabilization of wine, which complies with legislation governing tartaric stabilization in the wine sector and is entirely reliable.

### Brief description of the drawings

The technical characteristics of the present invention, in accordance with the aforementioned objects, may be determined from the contents of the claims below and the advantages thereof will emerge more clearly from the detailed description which follows provided with reference to the graphs illustrating the results of tests for tartaric stabilization using the product according to the process of the invention compared with other commercial products of a known type.

### Detailed description of a preferred embodiment of the present invention

With the process for treating wine according to the present invention it is possible to perform the tartaric stabilization of wine.

More particularly, this process for treating wine envisages initially producing glucan particles retaining active pores and a fibrous structure of the original cells.

This production is performed by means of a method comprising a step which involves isolating, from yeast cell walls, glucan particles substantially retaining the structural porosity and fibrosity characteristics of the original reticular structure.

This isolation step envisages:
a) extracting mannoproteins from suspensions with water at a temperature above boiling point;
b) removing the contaminated protein fraction by means of protease or non-denaturing chemical means;
c) removing the contaminated lipid fraction by means of lypase or solvent extraction.

The steps for isolating said glucan particles in accordance with the abovementioned procedure may be also be performed in an order different from that described above without thereby departing from the scope of protection defined by the present patent.

Depending on the starting material one or more of the steps of the abovementioned procedure may be eliminated.

The glucan particles isolated by means of the abovementioned steps have a near-intact base structure and suitably activated pores.

The patent WO 02/12348 discloses an isolation process by means of which it is possible to obtain glucan particles retaining the original porous structure, using cells, cell walls, fragments of cell walls of single-cell organisms such as yeasts or fungi or residual cell-wall matter of plants containing glucan.

The isolation process, with regard to its aforementioned general characteristics and particular characteristics, is described in the patent WO 02/12348, in particular with reference to the text as published on 14.2.2002 under number WO 02/12348 A2, page 5, line 23, to page 9, line 24, or with reference to the contents of Claims 6 to 15.

The glucan particles thus obtained have an on average high molecular weight for example greater than 100,000 Daltons and dimensions ranging between 0.1 and 25 micrometres.

The production method then envisages dispersing the active glucan particles thus isolated in a solvent, in particular consisting of an aqueous solution of citric acid, and then performing microfiltration of the particles using a filter having a mesh size smaller than 0.65 microns.

At this point the permeate is selected for extraction of a product consisting of active glucans with a molecular weight of less than 100,000 Daltons.

Surprisingly, the soluble particle components and the insoluble glucan components which pass through the abovementioned filter prove to be particularly effective if used in the wine sector for the tartaric stabilization of wine.

The glucan particles thus obtained are particularly active for the purposes of stabilization despite their low molecular weight.

Preferably, the active glucans with a molecular weight of less than 100,000 Daltons are obtained by carrying out on the permeate obtained with microfiltration of the abovementioned dispersion using a filter with a mesh size smaller than 0.65 microns a first ultrafiltration step using a 50,000 Dalton membrane and then preferably a further ultrafiltration step using a 30,000 Dalton membrane.

The active glucan particles thus obtained may be marketed for oenological purposes for achieving the tartaric stabilization of wine.

The conductivity in wines is closely linked to the quantity of salts which remain dissolved without precipitating. Therefore, a high conductivity indicates a lack of precipitation and therefore tartaric stability.

Moreover, high conductivity values which remain even after long periods of time indicate a continued tartaric stability which is the desired goal in oenology.

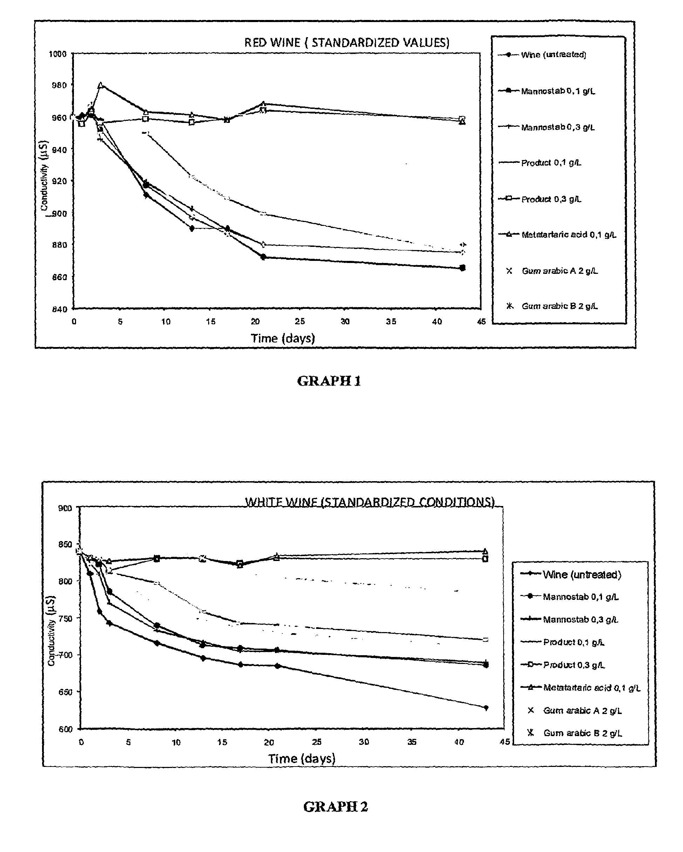

Graphs 1 and 2 show the progression of the conductivity values in microsiemens for a time period expressed in days (standardised values) in the case of a red wine and white wine treated with different stabilizing products. In particular, the graphs allow a comparison of the behaviour of stabilizing products of the known type, such as mannoproteins, with the glucan according to the present invention indicated with two different concentration values in a (for example aqueous) solution of 0.1 g/l and 0.3 g/l.

The finding according to the invention therefore achieves the predefined objects.

## Claims

1. Process for the tartaric stabilization of wine, **characterized in that** it comprises the following steps:
- providing the wine to be treated inside a special container;
- mixing said wine contained inside said container with a product for the tartaric stabilization of wine, formed by glucan particles having structural porosity and fibrosity characteristics of yeast cell walls and having a molecular weight of less than 100,000 Daltons and dimensions of less than 1 micrometre.

2. Process for the tartaric stabilization of wine according to Claim 1, **characterized in that** said product is obtained by means of a production method comprising the following steps:
- isolating from yeast cell walls glucan particles substantially retaining the structural porosity and fibrosity characteristics of the initial reticular structure by:
a) extracting mannoproteins from suspensions with water at a temperature above boiling point;
b) removing the contaminated protein fraction by means of protease or non-denaturing chemical means;
c) removing the contaminated lipid fraction by means of lypase or solvent extraction;
- dispersing said particles in a solvent, in particular water;
- performing microfiltration of said particles using a filter with a mesh size smaller than 0.65 micron;
- selecting the permeate in order to extract a product consisting of active glucans with a molecular weight of less than 100,000 Daltons.

## Patentansprüche

1. Verfahren zur Weinsteinstabilisierung von Wein, **dadurch gekennzeichnet, dass** es die folgenden Phasen umfasst:
- Füllen des zu behandelnden Weins in einen hierfür vorgesehenen Behälter;
- Mischen dieses in diesem Behälter enthaltenen Weins mit einem Produkt fiir die Weinsteinstabilisierung von Wein, das aus Glucan-Teilchen gebildet ist, die strukturelle Eigenschaften hinsichtlich Porosität und Fasrigkeit von Hefezellwänden aufweisen und ein Molekulargewicht von weniger als 100.000 Dalton und Abmessungen von weniger als 1 Mikrometer haben.

2. Verfahren zur Weinsteinstabilisierung von Wein nach Anspruch 1, **dadurch gekennzeichnet, dass** dieses Produkt mit einem Herstellungsverfahren hergestellt wird, das die folgenden Phasen umfasst:
- Isolieren aus Hefezellwänden von Glucan-Teilchen, die im Wesentlichen die strukturellen Eigenschaften hinsichtlich Porosität und Fasrigkeit des Ausgangsretikulums bewahren, durch:
a) Extraktion von Mannoproteinen aus Suspensionen mit Wasser mit einer Temperatur über dem Siedepunkt;
b) Entfernen der Verunreinigungsfraktion aus Proteinen mittels Proteasen oder anderer nicht denaturierender chemischer Mittel;
c) Entfernen der Verunreinigungsfraktion aus Lipiden mittels Lipasen oder Extraktion mit Hilfe eines Lösemittels.
- Dispersion dieser Teilchen in einem Lösemittel, insbesondere Wasser;
- Mikrofiltration dieser Teilchen mit Hilfe eines Filters mit einer Maschenweite unter 0,65 Mikrometer;
- Selektieren des Permeats, um ein Produkt aus aktiven Glucanen mit einem Molekulargewicht unter 100.000 Dalton zu extrahieren.

## Revendications

1. Procédé de stabilisation tartrique du vin, **caractérisé en ce qu'**il comprend les étapes suivantes :
- prédisposer le vin à traiter dans un récipient spécifique ;
- mélanger ledit vin contenu dans ledit récipient avec un produit pour la stabilisation tartrique du vin, formé de particules de glucanes avec des caractéristiques structurales de porosité et de fibrosité de parois cellulaires de levures et ayant un poids moléculaire inférieur à 100.000 Dalton et des dimensions inférieures à 1 micromètre.

2. Procédé de stabilisation tartrique du vin selon la revendication 1, **caractérisé en ce que** ledit produit est obtenu au moyen d'un procédé de production comprenant les étapes suivantes :
- isolement, par rapport à des parois de cellules de levure, de particules de glucanes conservant sensiblement les caractéristiques structurales de porosité et de fibrosité du réseau de départ au moyen de :
a) l'extraction de mannoprotéines à partir de suspensions avec de l'eau à température au-dessus du point d'ébullition ;
b) l'élimination de la fraction de contamination de protéines au moyen de protases ou de moyens chimiques non dénaturants ;
c) l'élimination de la fraction de contamination de lipides au moyen de lipases ou l'extraction au moyen d'un solvant ;
- dispersion desdites particules dans un solvant, en particulier l'eau ;
- microfiltration desdites particules au moyen d'un filtre ayant des mailles de dimensions inférieures à 0,65 micron;
- sélection de l'ultrafiltrat pour extraire un produit de glucanes actifs avec poids moléculaire inférieur à 100.000 Dalton.
